# EUROPEAN PATENT SPECIFICATION

(11) **EP 2 361 130 B1**
(45) Date of publication and mention of the grant of the patent: **23.12.2015**
(21) Application number: 09760245.2
(22) Date of filing: 16.10.2009
(51) Int. Cl.: B01D 29/27, C02F 1/469, C02F 11/12

(54) **A DEVICE AND METHOD FOR DEWATERING AQUEOUS SUSPENSIONS**
VORRICHTUNG UND VERFAHREN ZUM ENTWÄSSERN VON WÄSSRIGEN SUSPENSIONEN
DISPOSITIF ET PROCÉDÉ POUR LA DÉSHYDRATATION DE SUSPENSIONS AQUEUSES

(30) Priority: 20.10.2008 GB 0819152
(43) Date of publication of application: 31.08.2011
(73) Proprietor: Electrokinetic Limited, Newcastle Upon Tyne NE1 7RU (GB)
(72) Inventor: JONES, Colin, John, Francis, Philip, York YO24 1AS (GB); LAMONT-BLACK, John, Newcastle Upon Tyne NE3 1EB (GB)
(74) Representative: Vinsome, Rex Martin
(86) International application number: PCT/GB2009/002488
(87) International publication number: WO 2010/046630

(56) References cited:
- EP-A1- 0 402 243
- WO-A1-2005/058463
- GB-A- 307 879
- JP-A- 6 071 114
- JP-A- 2002 096 098
- US-A- 5 215 660
- US-A- 5 910 247

## Description

### Field of the Invention

The present invention relates to a device and a method for dewatering particulate materials. In particular the dewatering of sludge materials whereby an electrokinetic process of removing water, together with conventional hydraulic dewatering is employed.

### Background to the Invention

Many industrial processes generate large volumes of aqueous particulate suspensions in the forms of sludges, slurries, pulps, tailings and other materials. Even where the constituents of the suspensions are not harmful, the difficulty of handling the suspensions lies in the volume required for transportation and for their disposal. Although the materials comprise a large proportion of water, the rate of loss of water therefrom is slow, partly due to the stability of the suspension. Moreover, water loss from the surface can lead to a semi-solid crust of material forming which can be dangerous should someone attempt to traverse the surface. Further, it would be advantageous if the water could be re-used, a particularly important feature where material is produced in an arid region, for example as waste in a mining operation.

It is therefore desirable to remove as much of the water from the suspension as possible. To this end, a number of processes are known in the prior art: both continuous and batch processes. Amongst the latter set include plate filter presses and the use of electrokinetic materials disclosed in PCT/GB 04/04181. The presses operate through application of a positive pressure to the waste material contained within a cell. The applied pressure causes drainage to occur through passage of water through a, usually, polymeric belt or sheet.

The materials disclosed in PCT/GB 04/04181, include electrodes woven into a sheet of the materials which can itself be a woven material. The electrodes operate to cause water to move from an anode sheet toward a cathode sheet/filter, thence out of the suspension, thereby drying out the suspension.

Both of the above-described methods are suitable for dewatering large volumes of inhomogeneous materials. They do however tend to require supporting and associated apparatus which occupies a large surface area in order to function. It would be of advantage therefore to devise a method or apparatus requiring a smaller area.

It is an object of the current invention to provide an apparatus which seeks to address the above problems and which could be used with both homogeneous and non-homogeneous materials. It is a further object of the invention to provide a method of dewatering aqueous particulate suspensions which seeks to address the problem.

JP 2002096098 discloses an electro-osmosis dewatering device including a cylindrical filter medium. US 5,910,247 discloses a two-element filter bag.

### Summary of the Invention

According to a first aspect of the invention there is provided a method of dewatering an aqueous suspension of particulate material, the method characterised by:
providing a bag having a wall comprising a non-conductive base material associated with at least one cathode element comprising a conductive element, the wall being permeable to water but impermeable to substantially all of the particulate material, wherein the bag defines a first aperture at a first end, such that a second end of the bag may be suspended within the first aperture, the first aperture at the first end of the bag being larger than the second end of the bag;
suspending the bag by the first end of bag such that the aperture is held open;
securing the second end within the first aperture, the suspended bag forming thereby a bisected torus having
a trough portion to receive a material to be dewatered;
adding a suspension to be dewatered to the trough portion and allowing water from the suspension to drain out of the bag;
engaging an anode with the material to be dewatered and applying an electric potential such that current flows between the anode and the cathode; and
releasing the first end of the bag, allowing dewatered material to be removed.

The inside of the bag can be easily cleaned of material adhered to its sides, ready for re-use.

Optionally, the first end of the bag is suspended prior to suspension of the second end. As the first end is larger, the distribution of the weight is spread over a large circumference.

Advantageously, the bag is suspended from straps secured to the side of the bag. The straps facilitate fixture of the bag to a supporting structure, which may be specially designed for the bag. Further advantageously, the support structure includes a conical support element over which the bag is draped.

The material from which the bag is made advantageously includes an ultraviolet resistant component to reduce degradation of the material when the bag is used in the open air.

The cathode preferably comprises a metallic wire or conductive element woven into the material of the bag. Further preferably, the width of wire is from approximately 0.1 - 2mm in thickness. Yet further optionally, the spacing between adjacent wires is from 5 - 50mm.

Optionally the diameter of the bag is selected to be from 0.3 - 2.0m. Further optionally, the height of the bag is selected to be from 0.3 - 4.0m.

Preferably, the bag is formed by bringing together in seaming engagement opposed edges of a suitably configured piece of material.

The cathode is advantageously connected to a current distribution means through bundles of metallic or conductive yarn within the bag material which may be disposed in either or both of the warp or weft direction. Further advantageously, the connection is achieved by means of a transfer strip in the complimentary weave direction of the main conducting elements. Yet further advantageously, connection is achieved by stapling cut edges of the conductive elements in the warp or weft of material, following the seaming engagement of the material edges.

According to a second aspect of the invention there is provided a device for dewatering an aqueous suspension of particulate material, characterised in that the device comprises a dewatering bag, the dewatering bag comprising a wall permeable to water but impermeable to substantially all of the particulate material, the wall comprising a non-conductive base material in association with a cathode element comprising a conductive element; wherein the bag comprises a first aperture at a first end, the bag being larger at the first end , the first aperture at the first end of the bag being larger than the second end of the bag, such that the bag may be suspended by the first end of the bag with the first aperture held open, and the second end of the bag may be secured within the first aperture to form a trough portion to receive material to be dewatered.

### Brief Description of the Drawings

The invention is now described with reference to the accompanying drawings which show by way of example only, one embodiment of a dewatering bag. In the drawings:
Figure 1 illustrates a bisected torus;
Figure 2 illustrates a pattern for a bag;
Figure 3 illustrates a bag in an in-use configuration;
Figure 4 illustrates release of dewatered material from the bag;
Figure 5 illustrates a conical framework to support a bag and Figure 6 illustrates the ratios of the radii to the height in the bag.

### Detailed Description of the Invention

The bags as disclosed herein are intended for use in a number of technical fields where it is necessary or of advantage to be able to remove water from a material prior to, for example, disposal of the dewatered material in a landfill site.

Such uses include removing water from estuarine marine soils and dredgings, mine tailings, mineral sludges, agricultural and food wastes, industrial wastes, sewage sludges and gully emptyings, and the general operating principle is exemplified in International Patent Application No. PCT/GB04/04181.

In general, a bag is provided having walls made of a material which allows water to pass therethrough, but which retains substantially all of the particulate material. Woven into the walls is a metal or other electric conductor capable of functioning as a cathode. When sludge or other suitable material to be dewatered is loaded into the bag, an anode is brought into contact with the sludge and an electric potential applied. A voltage gradient is applied across the sludge the result of which is that water is removed from the sludge to pass through the walls by electro-osmosis which water can thence drain away. The water content of the sludge is thereby substantially reduced, resulting in a material which is more easily handled, takes up less volume and is less hazardous.

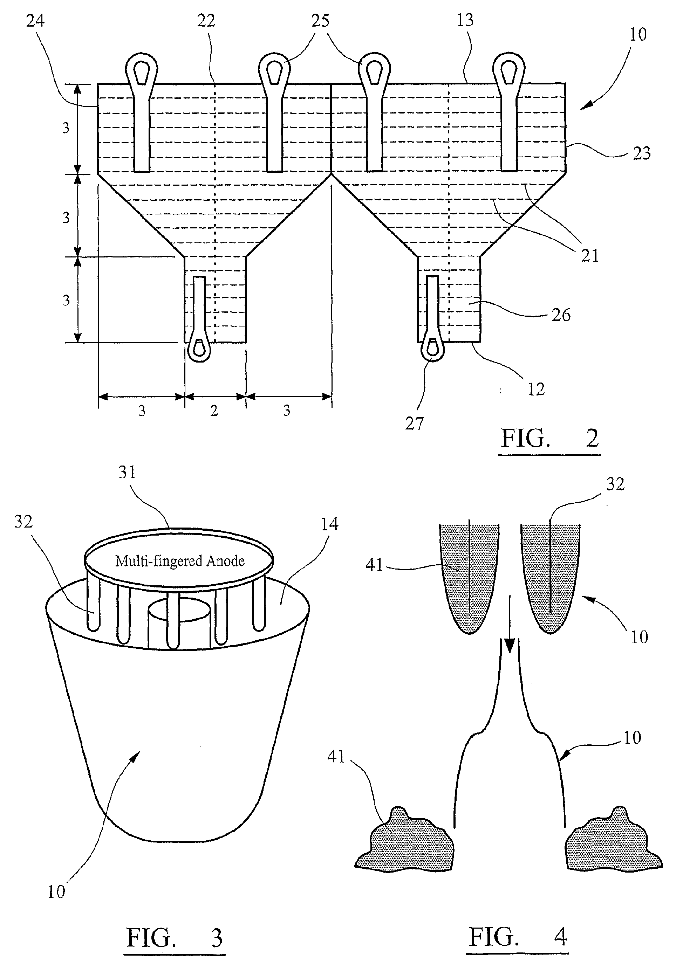

The bag is provided in the form of a bisected torus, and has therefore a trough portion to retain the sludge. The advantage of the bisected torus design is that it provides, effectively, two surfaces (inner surface and outer surface) for filtration. The flow path length for water moving out of the sludge compared to a simple cylindrical bag shape is thereby halved. Further, having all surfaces of the bag acting as the cathode and having an anode placed equidistant from the cathode surfaces (Figure 3)means that an applied voltage will achieve double the voltage gradient, driving water in two directions and for half the distance compared to a simple cylindrical design with the anode placed in the centre of a cylindrical or similar bag. This has the potential to increase rapidly the speed of dewatering.

Once dewatering has taken place however, the problem then remains of removing the dry material from the bag. This difficulty is increased when the bag is intended for re-use as the material not only needs to be removed, without damage to the bag, but also cleaning needs to be carried out in order to prevent a layer of dried material adhering to the bag's inner surface and hindering or preventing operation of the cathode on a further batch of wet material.

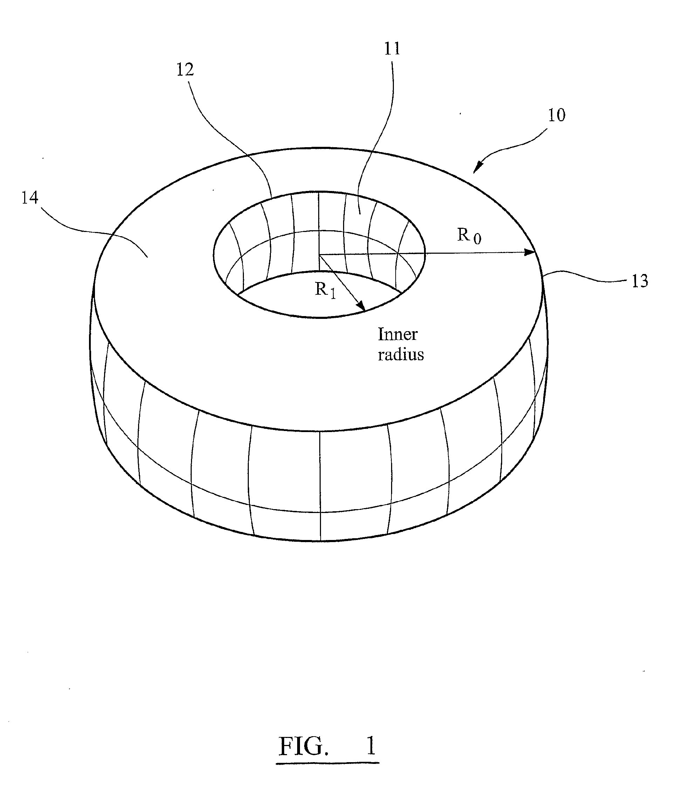

The bag and the method of its use mitigate the above difficulties. Referring initially to Figure 1, this illustrates a bag 10 in a configuration to retain and dewater a sludge material. The configuration is referred to as a bisected torus having a central aperture 11 defined by in inner edge 12, and an outer edge 13. A trough 14 is thereby formed into which sludge can be added. In Figure 2, a pattern is shown for material to be used in the construction of a bag 10. The basic material from which a bag 10 is formed is designed to allow the passage of water through its walls. Typically the walls are formed from a non-conductive polymeric base material and can include a component which absorbs ultra violet radiation and so reduces the degredation of the material when the bag is exposed to the sunlight. In order to assist the passage of water through the wall, an electric potential is set up which moves the water by electro-osmosis.

To this end a conductor, which in use functions as a cathode, is incorporated into the wall to create an electrokinetic geosynthetic (EKG) material. The conducting element can be either formed of a metal or other material known in the art. The conducting element is typically in wire or thread form, and can be woven, knitted or otherwise attached onto or within the material making up the wall of the bag. The conducting element is incorporated into the weft or warp direction of the material and is shown as the set of horizontal lines 21 in Figure 2. In order to enable a charge to be transferred a circuit is formed through the use of warp or weft transfer strips 22 incorporated into the material and engaging the ends of bundles of wires or threads.

In order to form a bag therefore, the pattern of material shown in Figure 2 is taken and the edges of the pattern 23 and 24 are brought together. The edges 23, 24 are sealed to each other along a seam. The bag 10 thereby formed is essentially funnel-shaped. The size of the bag 10 made in accordance with the above description has a height of around 0.3 - 4.0m. Typically, diameters are around 0.3 - 2.0m (giving a circumference of from 1.0 - 6.3m).

In order to enable the bag 10 to function therefore, the bag 10 is suspended from a suitable support by the upper support straps 25. The funnel portion 26 of the bag 10 also includes support straps 27. Once the bag 10 has been suspended from the support straps 25, the funnel portion 26 is drawn up through the centre of the bag 10 such that the edge 12 of the funnel portion lies within the circumference of the outer edge 13. The inner and outer edges 12, 13 are typically held at the same level to maximise the volume of the trough 14 formed, although where required due to other constraints, they may be at different levels. The straps 27 are secured in position to the support. The funnel portion 26 of the bag 10 is shown in the Figures to be open. However in certain embodiments, not illustrated, the funnel portion 26 is closed.

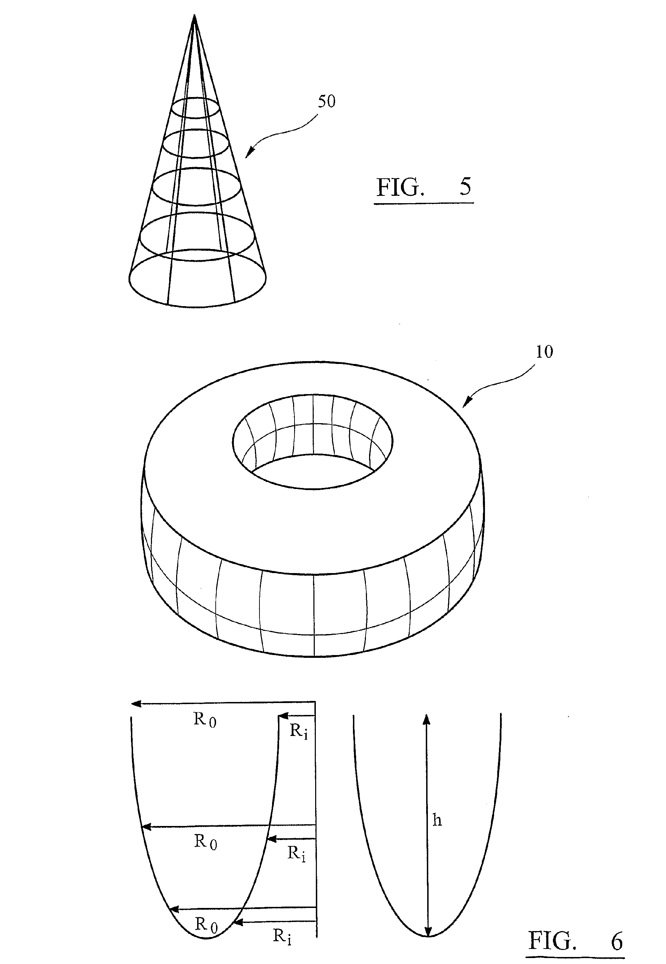

The bag 10 is now in a bisected torus configuration, shown in Figure 3, with the open edge facing upwards. The cathode wall of the bag 10 now forms a trough 14 into which sludge can be added and dewatered. As an alternative to using support straps 27, the funnel portion 26 of the bag 10 may be supported from beneath by a structural conical framework 50 (shown in Figure 5), which may in addition act as a means of electrical transfer to the cathode bag.

It will be recognised that in the above construction, the funnel portion 26 could be first suspended from a support by means of the strap 27 and the walls then drawn up about the outside of the funnel portion 26 and suspended from the straps 25. This method of attachment has the advantage in that a user does not have to secure the bag 10, whilst standing underneath the bag 10 or by working above the bag 10 and lifting the funnel portion 26 by suitable means. The task is therefore made easier and safer, although the weight of the bag 10 is borne for a period by the smaller, funnel portion 26 which may cause undue strain in the bag material.

Once the bag is in position, a multi-fingered anode 31 (see Figure 3) is brought down into a position such that the anode's fingers 32 are below the surface of the wet material or sludge which is to be dewatered.

When the sludge is contained with the trough 14 and the anode 31 is in position, a potential is applied causing water to be removed across the walls of the bag 10, which water once on the outside of the bag 10 can drain away. The water drained off can be subject to further processing if required to remove any contaminants which also pass through the walls. When dewatering has been completed, the potential is removed and the bag 10 readied for removal of the solid material remaining therein.

The means of removing the solid is illustrated in Figure 4. In the upper section of Figure 4, a vertical section through the bag 10, containing the solid material 41 is shown. One or more anode fingers 32 remain within the solid 41. To release the solid, the straps 25 are released allowing the cathode wall of the bag 10 to fall down beneath the funnel portion 26 which remains supported. The solid 41 therefore is deposited on the ground or on a suitable surface ready for transport to a disposal or further treatment site.

The inner surface of the bag 10 is now exposed to the outside and is in the ideal position to be cleaned. Cleaning can be carried out by conventional means for example by jet-washing or air drying.

The bag 10 is ready for re-use once the walls have been resupported by the straps 25 to return the bag 10 to the configuration shown in Figure 2.

The design of the bag 10 presented herein has several advantages for both electroosomotic and conventional or hydraulic dewatering. As regards conventional dewatering, the bag design provides two effective filtration surfaces (inner and outer) and thus halves the flow path length compared to a simple bag design. Conventional dewatering in geotextile bags or tubes can have the disadvantage that when attempting to dewater awkward or difficult to dewater materials, dewatering may cease and yet the material in the centre of the bag remain in a wet state with a large proportion of its original water content still present. It is a specific object of the present invention to provide an additional filtration surface in the centre of the bag to tackle exactly this problem.

In an alternative embodiment, not illustrated, the funnel portion of the bag 10 shown in Figure 2 can be formed of a mesh material of, for example, tubular construction. The mesh material is selected to be capable of functioning as an electrode and in particular, as a cathode. The mesh is secured, at one end, to the EKG material of the rest of the bag by conventional means.

As regards electrokinetic dewatering, the invention also has specific advantages. By making all surfaces cathodic and adopting the bisected torus shape and placing the anode midway between the cathode surfaces (i.e. circularly disposed in the trough), electroosmotic flow will act in two directions relative to the anode and in sympathy with hydraulic dewatering, which will do the same i.e. towards the cathode or bag outer surface and towards the cathode or bag inner surface. It is the voltage gradient which drives electroosmotic flow. By reducing the distance over which the voltage acts the voltage gradient is increased.

Compared to simple cylindrical or tubular designs with the anode at the centre, the bisected torus design has positive implications for health and safety by permitting larger voltage gradients to be achieved without the necessity of raising actual applied voltages.

The reduction in volume contained in the bag as a consequence of the open centre of the bisected torus design is an acceptably small loss for the increased effectiveness of both hydraulic and electroosmotic dewatering offered by this invention.

It is noted that given the advantages conferred by the invention, to the process of hydraulic dewatering, the invention may be used without the application of a voltage gradient. As such and for certain types of material the bag may be constructed without metallic conducting elements, which would normally serve to facilitate electroosmosis. In these instances the advantages for hydraulic dewatering would permit dewatering of materials which would not normally dewater acceptably with hydraulic dewatering in a conventionally designed bag or tube.

In practice, depending on the sludge being dewatered, the parameters of the bag such as the height h, and the values of the inner and outer radii Rᵢ and Rₒ together with their ratios Rᵢ:Rₒ (as shown in Figure 6) are set to give the optimum dewatering. The values are adjusted, consideration being given to the material density, the ratios of electroosmotic and hydraulic permeabilities and material shear strength for bag emptying operations.

It is of course understood that the invention is not limited to specific details described herein, given as examples only, and that various modifications and alterations are possible with the scope of the appended claims.

## Claims

1. A method of dewatering an aqueous suspension of particulate material (41), the method **characterised by**: providing a bag (10) having a wall comprising a non-conductive base material associated with at least one cathode element (21) comprising a conductive element (21), the wall being permeable to water but impermeable to substantially all of the particulate material (41), wherein the bag (10) defines a first aperture at a first end (13) of the bag (10), such that a second end (12) of the bag may be suspended within the first aperture, the first aperture at the first end of the bag being larger than the second end (12) of the bag (10); suspending the bag (10) by the first end (13) of bag such that the first aperture is held open; securing the second end (12) within the first aperture, the suspended bag forming thereby a bisected torus having a trough portion (14) to receive a material (41) to be dewatered; and adding a suspension (41) to be dewatered to the trough portion (14) and allowing water from the suspension (41) to drain out of the bag (10); engaging an anode (32) with the material to be dewatered and applying an electric potential such that current flows between the anode (32) and the cathode element (21); and releasing the first end (13) of the bag (10), to allow dewatered material (41) to be removed.

2. A method according to claim 1, wherein:
(i) the first end of the bag (10) is suspended prior to suspension of the second end;
(ii) the bag (10) is suspended from straps (25, 27) secured to the side of the bag (10); and/or
(iii) the method further comprises providing a conical support element (50) over which the bag (10) is draped.

3. A method according to claim 1 or claim 2, further comprising at least one of the following features:
(i) wherein the bag (10) further comprises a second aperture (11) at the second end, wherein the first aperture at the first end is larger than the second aperture (11) at the second end;
(ii) wherein the base material comprises a polymeric material;
(iii) wherein the conductive element (21) comprises a metal;
(iv) wherein the material from which the bag (10) is made includes an ultra-violet radiation resistant component to reduce degradation of the material when the bag (10) is used in the open air;
(v) wherein the diameter of the bag (10) is selected to be from 0.3 - 2.0m;
(vi) wherein the height (h) of the bag (10) is selected to be from 0.3 - 4.0m; and/or (vii) wherein the bag (10) is formed by bringing together in seaming engagement, opposed edges (23, 24) of a suitably configured piece of material.

4. A method according to any of the preceding claims, wherein the cathode element (21) comprises a metallic wire (21) or other conductive element (21) woven into the base material of the wall of the bag (10).

5. A method according to claim 4, wherein:
(i) the thickness of the conductive element (21) is approximately 0.1 - 2mm; or
(ii) the thickness of the conductive element (21) is approximately 0.1 - 2mm and the spacing between adjacent conductive elements (21) is from about 5mm to about 50mm.

6. A method according to claim 4 or claim 5, wherein the conductive element (21) of the cathode element (21) is connected to a current distribution means through bundles of metallic or conductive yarn (22) within the base material which may be disposed in either or both of the warp or weft direction.

7. A method according to Claim 6, wherein the connection is achieved by means of a transfer strip (22) in the complementary weave direction of the conductive element of the cathode element (21), and/or by stapling cut edges of the conductive elements (21) in the warp or weft of material, following the seaming engagement of the material edges (23, 24).

8. A device for dewatering an aqueous suspension of particulate material (41), **characterised in that** the device comprises a dewatering bag (10) comprising a wall permeable to water but impermeable to substantially all of the particulate material (41), the wall comprising a non-conductive base material in association with a cathode element (21) comprising a conductive element (21); wherein the bag (10) comprises a first aperture at a first end (13), the first aperture at the first end of the bag being larger than a second end (12) of the bag (10), such that the bag (10) may be suspended by the first end (13) of the bag (10) with the first aperture held open, and the second end (12) of the bag (10) may be secured within the first aperture to form a trough portion (14) to receive material (41) to be dewatered.

9. A device according to claim 8, further comprising at least one of the following features:
(i) wherein the bag (10) is substantially tubular in shape;
(ii) wherein the bag (10) further comprises a second aperture (11) at the second end, wherein the first aperture at the first end is larger than the second aperture (11) at the second end;
(iii) wherein the bag (10) is configured such that, when suspended to form said trough portion (14), the bag (10) forms a bisected torus comprising said trough portion (14);
(iv) wherein the base material comprises a polymeric material;
(v) wherein the conductive element (21) comprises a metal;
(vi) wherein the bag (10) further comprises straps (25, 27) secured to the side of the bag (10) for suspending the bag (10);
(vii) the device further comprises a conical support element (50) over which the bag (10) may be draped;
(viii) wherein the material from which the bag (10) is made includes an ultra-violet radiation resistant component to reduce degradation of the material when the bag (10) is used in the open air;
(ix) wherein the diameter of the bag (10) is selected to be from 0.3 - 2.0m;
(x) wherein the height (h) of the bag (10) is selected to be from 0.3 - 4.0m; and/or
(xi) wherein the bag (10) is formed by bringing together in seaming engagement, opposed edges (23, 24) of a suitably configured piece of material.

10. A device according to claim 8 or claim 9, wherein the cathode element (21) comprises a metallic wire (21) or other conductive element (21) woven into the base material of the wall of the bag.

11. A device according to claim 10, wherein (i) the thickness of the conductive element (21) is approximately 0.1 - 2mm; or
(ii) the thickness of the conductive element (21) is approximately 0.1 - 2mm and the spacing between adjacent conductive elements (21) is from about 5mm to about 50mm.

12. A device according to claim 10 or 11, wherein the conductive element (21) of the cathode element (21) is connected to a current distribution means through bundles of metallic or conductive yarn (22) within the base material which may be disposed in either or both of the warp or weft direction.

13. A device according to claim 12, wherein the connection is achieved by means of a transfer strip (22) in the complementary weave direction of the conductive element (21) of the cathode element (21), and/or by stapling cut edges of the conductive elements (21) in the warp or weft of material, following the seaming engagement of the material edges (23, 24).

14. A device according to claim 13, further comprising an anode (31), engageable with material (41) to be dewatered in the trough (14) for applying an electric potential such that current flows between the anode (31) and the cathode element (21).

15. A device according to claim 14, wherein the anode (31) is a multifingered anode (31).

## Patentansprüche

1. Ein Verfahren zur Entwässerung einer wässrigen Suspension eines teilchenförmigen Materials (41), wobei das Verfahren **gekennzeichnet ist durch**: Bereitstellen eines Beutels (10) mit einer Wand, umfassend ein nichtleitendes Grundmaterial, verbunden mit mindestens einem Kathodenelement (21), umfassend ein leitfähiges Element (21), wobei die Wand permeabel gegenüber Wasser aber impermeabel gegenüber im Wesentlichen dem gesamten teilchenförmigen Material (41) ist, wobei der Beutel (10) eine erste Öffnung an einem ersten Ende (13) des Beutels (10) begrenzt, sodass ein zweites Ende (12) des Beutels innerhalb der ersten Öffnung aufgehängt werden kann, wobei die erste Öffnung an dem ersten Ende des Beutels größer ist als das zweite Ende (12) des Beutels (10); Aufhängen des Beutels (10) an dem ersten Ende (13) des Beutels, sodass die erste Öffnung offengehalten wird; Befestigen des zweiten Endes (12) innerhalb der ersten Öffnung, wodurch der aufgehängte Beutel einen halbierten Torus mit einem Trogbereich (14) bildet, um ein zu entwässerndes Material (41) aufzunehmen; und Zugeben einer zu entwässernden Suspension (41) in den Trogbereich (14), sodass dem Wasser aus der Suspension ermöglicht wird aus dem Beutel (10) abzulaufen; Eingreifen einer Anode (32) in das zu entwässernde Material und Anlegen eines elektrischen Potentials, sodass Strom zwischen der Anode (32) und dem Kathodenelement (21) fließt; und Lösen des ersten Endes (13) des Beutels (10), um das Entfernen des entwässerten Materials (41) zu ermöglichen.

2. Ein Verfahren nach Anspruch 1, wobei
(i) das erste Ende des Beutels (10) vor dem Aufhängen des zweiten Endes aufgehängt wird;
(ii) der Beutel (10) an Laschen (25, 27), die an der Seite des Beutel (10) befestigt sind, aufgehängt wird; und/oder
(iii) das Verfahren ferner das Bereitstellen eines konischen Stützelements (50), über welchem der Beutel (10) drapiert wird, umfasst.

3. Ein Verfahren nach Anspruch 1 oder Anspruch 2, ferner umfassend mindestens eines der folgenden Merkmale:
(i) wobei der Beutel (10) ferner eine zweite Öffnung (11) an dem zweiten Ende umfasst, wobei die erste Öffnung an dem ersten Ende größer ist als die zweite Öffnung (11) an dem zweiten Ende;
(ii) wobei das Grundmaterial ein polymeres Material umfasst;
(iii) wobei das leitfähige Element (21) ein Metall umfasst;
(iv) wobei das Material, aus dem der Beutel (10) hergestellt ist, eine gegenüber ultravioletter Strahlung resistente Komponente enthält, um die Zersetzung des Materials zu reduzieren, wenn der Beutel (10) im Freien verwendet wird;
(v) wobei der Durchmesser des Beutels (10) aus 0,3 - 2,0 m ausgewählt ist;
(vi) wobei die Höhe (h) des Beutels (10) aus 0,3 - 4,0 m ausgewählt ist; und/oder
(vii) wobei der Beutel (10) durch das Zusammenbringen gegenüberliegender Kanten (23, 24) eines geeignet gestalteten Materialstücks mittels Nähverbindung gebildet wird.

4. Ein Verfahren nach einem der vorstehenden Ansprüche, wobei das Kathodenelement (21) einen metallischen Draht (21) oder ein anderes leitfähiges Element (21) umfasst, welches in das Grundmaterial der Wand des Beutels (10) eingewebt ist.

5. Ein Verfahren nach Anspruch 4, wobei:
(i) die Dicke des leitfähigen Elements (21) ungefähr 0,1 - 2 mm beträgt; oder
(ii) die Dicke des leitfähigen Elements (21) ungefähr 0,1 - 2 mm beträgt und der Abstand zwischen benachbarten leitfähigen Elementen (21) von etwa 5 mm bis etwa 50 mm beträgt.

6. Ein Verfahren nach Anspruch 4 oder Anspruch 5, wobei das leitfähige Element (21) des Kathodenelements (21) mit einer Stromverteilungsvorrichtung durch Bündel metallischem oder leitfähigem Garns (22) innerhalb des Grundmaterials verbunden ist, welches in einer oder in beiden der Kett- oder Schussrichtung angeordnet sein kann.

7. Ein Verfahren nach Anspruch 6, wobei die Verbindung mittels eines Übertragungsstreifens (22), welcher in der ergänzenden Webrichtung des leitfähigen Elements des Kathodenelements (21) verläuft, und/oder durch verdrahten von Schnittkanten der leitfähigen Elemente (21) in der Kette oder dem Schuss des Materials gefolgt von Nähverbinden der Materialkanten (23, 24) erzielt wird.

8. Eine Vorrichtung zum Entwässern einer wässrigen Suspension eines teilchenförmigen Materials (41), **dadurch gekennzeichnet, dass** die Vorrichtung einen Entwässerungsbeutel (10) umfasst, welcher eine Wand umfasst, die permeabel gegenüber Wasser aber impermeabel gegenüber im Wesentlichen dem gesamtem teilchenförmigem Material (41) ist, wobei die Wand ein nichtleitendes Grundmaterial in Verbindung mit einem Kathodenelement (21), umfassend ein leitfähiges Element (21), umfasst; wobei der Beutel (10) eine erste Öffnung an einem ersten Ende (13) umfasst, wobei die erste Öffnung an dem ersten Ende des Beutels größer ist als ein zweites Ende (12) des Beutels (10), sodass der Beutel (10) an dem erste Ende (13) des Beutels (10) mit der ersten Öffnung offengehalten aufgehängt werden kann, und das zweite Ende (12) des Beutels (10) innerhalb der ersten Öffnung befestigt werden kann, um einen Trogbereich (14) zu bilden, um zu entwässerndes Material (41) aufzunehmen.

9. Eine Vorrichtung nach Anspruch 8, ferner umfassend mindestens eines der folgenden Merkmale:
(i) wobei der Beutel (10) im Wesentlichen eine schlauchförmige Form aufweist;
(ii) wobei der Beutel (10) ferner eine zweite Öffnung (11) an dem zweiten Ende umfasst, wobei die erste Öffnung an dem ersten Ende größer ist als die zweite Öffnung (11) an dem zweiten Ende;
(iii) wobei der Beutel (10) so ausgestaltet ist, dass er wenn er aufgehängt wird, um den Trogbereich zu bilden, der Beutel (10) einen halbierten Torus, umfassend den Trogbereich (14), bildet;
(iv) wobei das Grundmaterial ein polymeres Material umfasst;
(v) wobei das leitfähige Element (21) ein Metall umfasst;
(vi) wobei der Beutel (10) ferner Laschen (25, 27) zum Aufhängen des Beutels (10) umfasst, die an der Seite des Beutels (10) befestigt sind;
(vii) wobei die Vorrichtung ferner ein konisches Stützelement (50) umfasst, über welchem der Beutel (10) drapiert werden kann;
(viii) wobei das Material, aus dem der Beutel (10) hergestellt ist, eine gegenüber ultravioletter Strahlung resistente Komponente enthält, um die Zersetzung des Materials zu reduzieren, wenn der Beutel (10) im Freien verwendet wird;
(ix) wobei der Durchmesser des Beutels (10) aus 0,3 - 2,0 m ausgewählt ist;
(x) wobei die Höhe (h) des Beutels (10) aus 0,3 - 4,0 m ausgewählt ist; und/oder
(xi) wobei der Beutel (10) durch das Zusammenbringen gegenüberliegender Kanten (23, 24) eines geeignet gestalteten Materialstücks mittels Nähverbindung gebildet wird.

10. Eine Vorrichtung nach Anspruch 8 oder Anspruch 9, wobei das Kathodenelement (21) einen metallischen Draht (21) oder ein anderes leitfähiges Element (21) umfasst, welches in das Grundmaterial der Wand des Beutels (10) eingewebt ist.

11. Eine Vorrichtung nach Anspruch 10, wobei
(i) die Dicke des leitfähigen Elements (21) ungefähr 0,1 - 2 mm beträgt; oder
(ii) die Dicke des leitfähigen Elements (21) ungefähr 0,1 - 2 mm beträgt und der Abstand zwischen benachbarten leitfähigen Elementen (21) von etwa 5 mm bis 50 mm beträgt.

12. Eine Vorrichtung nach Anspruch 10 oder 11, wobei das leitfähige Element (21) des Kathodenelements (21) mit einer Stromverteilungsvorrichtung durch Bündel metallischem oder leitfähigem Garns (22) innerhalb des Grundmaterials verbunden ist, welches in einer oder in beiden der Kett- oder Schussrichtung angeordnet sein kann.

13. Eine Vorrichtung nach Anspruch 12, wobei die Verbindung mittels eines Übertragungsstreifens (22), welcher in der ergänzenden Webrichtung des leitfähigen Elements des Kathodenelements (21) verläuft, und/oder durch verdrahten von Schnittkanten der leitfähigen Elemente (21) in der Kette oder dem Schuss des Materials gefolgt von Nähverbinden der Materialkanten (23, 24) erzielt wird.

14. Eine Vorrichtung nach Anspruch 13, ferner umfassend eine Anode (31), welche in das zu entwässernde Material (41) in dem Trog (14) eingreifbar ist, um ein elektrisches Potential anzulegen, sodass Strom zwischen der Anode (31) und dem Kathodenelement (21) fließt.

15. Eine Vorrichtung nach Anspruch 14, wobei die Anode (31) eine mehrfingrige Anode ist.

## Revendications

1. Procédé de déshydratation d'une suspension aqueuse de matériau particulaire (41), le procédé est **caractérisé par** le fait :
de fournir une poche (10) ayant une paroi comprenant un matériau de base non-conducteur associé à au moins un élément de cathode (21) comprenant un élément conducteur (21), la paroi étant perméable à l'eau mais imperméable à essentiellement tout le matériau particulaire (41), où la poche (10) définit une première ouverture au niveau d'une première extrémité (13) de la poche (10), de sorte qu'une deuxième extrémité (12) de la poche puisse être suspendue à l'intérieur de la première ouverture, la première ouverture au niveau de la première extrémité de la poche étant plus grande que celle au niveau de la deuxième extrémité (12) de la poche (10) ; de suspendre la poche (10) par la première extrémité (13) de poche de sorte que la première ouverture soit maintenue ouverte ; de fixer la deuxième extrémité (12) à l'intérieur de la première ouverture, la poche suspendue formant ainsi un tore coupé ayant une partie creuse (14) pour recevoir un matériau (41) à déshydrater ; et d'ajouter une suspension (41) à déshydrater à la partie creuse (14) et de permettre à l'eau de la suspension (41) de s'évacuer hors de la poche (10) ; de mettre en prise une anode (32) avec le matériau à déshydrater et d'appliquer un potentiel électrique de sorte que le courant circule entre l'anode (32) et l'élément de cathode (21) ; et de libérer la première extrémité (13) de la poche (10), pour permettre à un matériau déshydraté (41) d'être retiré.

2. Procédé selon la revendication 1, dans lequel
(i) la première extrémité de la poche (10) est suspendue avant la suspension de la deuxième extrémité ;
(ii) la poche (10) est suspendue à des sangles (25, 27) fixées au côté de la poche (10) ; et/ou
(iii) le procédé comprend en outre le fait de fournir un élément de support conique (50) sur lequel la poche (10) est posée.

3. Procédé selon la revendication 1 ou 2, comprenant en outre au moins l'une des caractéristiques suivantes :
(i) la poche (10) comprend en outre une deuxième ouverture (11) au niveau de la deuxième extrémité, où la première ouverture au niveau de la première extrémité est plus grande que la deuxième ouverture (11) au niveau de la deuxième extrémité ;
(ii) le matériau de base comprend un matériau polymère ;
(iii) l'élément conducteur (21) comprend un métal ;
(iv) le matériau à partir duquel la poche (10) est réalisée comporte un composant résistant au rayonnement ultraviolet pour réduire la dégradation du matériau lorsque la poche (10) est utilisée en plein air ;
(v) le diamètre de la poche (10) est choisi entre 0,3 et 2,0 m ;
(vi) dans lequel la hauteur (h) de la poche (10) est choisie entre 0,3 et 4,0 m ; et/ou
(vii) la poche (10) est formée en rassemblant par engagement par sertissage, des bords opposés (23, 24) d'une pièce de matériau configurée de manière appropriée.

4. Procédé selon l'une des revendications précédentes, dans lequel l'élément de cathode (21) comprend un câble métallique (21) ou un autre élément conducteur (21) tissé dans le matériau de base de la paroi de la poche (10).

5. Procédé selon la revendication 4, dans lequel :
(i) l'épaisseur de l'élément conducteur (21) varie approximativement de 0,1 à 2 mm ; ou
(ii) l'épaisseur de l'élément conducteur (21) varie approximativement de 0,1 à 2 mm et l'espacement entre les éléments conducteurs adjacents (21) varie d'environ 5 mm à environ 50 mm.

6. Procédé selon la revendication 4 ou 5, dans lequel l'élément conducteur (21) de l'élément de cathode (21) est relié à un moyen de distribution de courant par des faisceaux de fil métallique ou conducteur (22) à l'intérieur du matériau de base qui peut être disposé dans le sens de la chaîne et/ou de la trame.

7. Procédé selon la revendication 6, dans lequel la liaison est réalisée au moyen d'une bande de transfert (22) dans le sens d'armure complémentaire de l'élément conducteur de l'élément de cathode (21), et/ou par agrafage de bords coupés des éléments conducteurs (21) dans la chaîne ou la trame du matériau, suite à l'engagement par sertissage des bords de matériau (23, 24).

8. Dispositif de déshydratation d'une suspension aqueuse de matériau particulaire (41), **caractérisé en ce que** le dispositif comprend une poche d'égouttage (10) comprenant une paroi perméable à l'eau mais imperméable à essentiellement tout le matériau particulaire (41), la paroi comprenant un matériau de base non-conducteur en association avec un élément de cathode (21) comprenant un élément conducteur (21) ; où la poche (10) comprend une première ouverture au niveau d'une première extrémité (13), la première poche au niveau de la première extrémité de la poche étant plus grande que celle au niveau d'une deuxième extrémité (12) de la poche (10), de sorte que la poche (10) puisse être suspendue par la première extrémité (13) de la poche (10) avec la première ouverture maintenue ouverte, et la deuxième extrémité (12) de la poche (10) peut être fixée à l'intérieur de la première ouverture pour former une partie creuse (14) pour recevoir le matériau (41) à déshydrater.

9. Dispositif selon la revendication 8, comprenant en outre au moins l'une des caractéristiques suivantes :
(i) la poche (10) est essentiellement en forme tubulaire ;
(ii) la poche (10) comprend en outre une deuxième ouverture (11) au niveau de la deuxième extrémité, où la première ouverture au niveau de la première extrémité est plus grande que la deuxième ouverture (11) au niveau de la deuxième extrémité ;
(iii) la poche (10) est configurée de sorte que, lorsqu'elle est suspendue pour former ladite partie creuse (14), la poche (10) forme un tore coupé comprenant ladite partie creuse (14) ;
(iv) le matériau de base comprend un matériau polymère ;
(v) ledit élément conducteur (21) comprend un métal ;
(vi) la poche (10) comprend en outre des sangles (25, 27) fixées au côté de la poche (10) pour suspendre la poche (10) ;
(vii) le dispositif comprend en outre un élément de support conique (50) sur lequel la poche (10) peut être posée.
(viii) le matériau à partir duquel la poche (10) est réalisée comporte un composant résistant au rayonnement ultraviolet pour réduire la dégradation du matériau lorsque la poche (10) est utilisée en plein air ;
(ix) le diamètre de la poche (10) est choisi entre 0,3 et 2,0 m ;
(x) la hauteur (h) de la poche (10) est choisie entre 0,3 et 4,0 m ; et/ou
(xi) la poche (10) est formée en rassemblant par engagement par sertissage, des bords opposés (23, 24) d'une pièce de matériau configurée de manière appropriée.

10. Dispositif selon la revendication 8 ou 9, dans lequel l'élément de cathode (21) comprend un câble métallique (21) ou un autre élément conducteur (21) tissé dans le matériau de base de la paroi de la poche.

11. Dispositif selon la revendication 10, dans lequel (i) l'épaisseur de l'élément conducteur (21) varie approximativement de 0,1 à 2 mm ; ou
(ii) l'épaisseur de l'élément conducteur (21) varie approximativement de 0,1 à 2 mm et l'espacement entre les éléments conducteurs adjacents (21) varie d'environ 5 mm à environ 50 mm.

12. Dispositif selon la revendication 10 ou 11, dans lequel l'élément conducteur (21) de l'élément de cathode (21) est relié à un moyen de distribution de courant par des faisceaux de fil métallique ou conducteur (22) dans le matériau de base qui peut être disposé dans le sens de la chaîne et/ou de la trame.

13. Dispositif selon la revendication 12, dans lequel la liaison est réalisée au moyen d'une bande de transfert (22) dans le sens d'armure complémentaire de l'élément conducteur (21) de l'élément de cathode (21), et/ou par agrafage de bords coupés des éléments conducteurs (21) dans la chaîne ou la trame de matériau, suite à l'engagement par sertissage des bords du matériau (23, 24).

14. Dispositif selon la revendication 13, comprenant en outre une anode (31), pouvant venir en prise avec un matériau (41) à déshydrater dans la partie creuse (14) pour appliquer un potentiel électrique de sorte qu'un courant circule entre l'anode (31) et l'élément de cathode (21).

15. Dispositif selon la revendication 14, dans lequel l'anode (31) est une anode à doigts multiples (31).
